(19) Europäisches Patentamt
European Patent Office
Office européen des brevets

(11) **EP 4 496 399 A1**

(12) **EUROPEAN PATENT APPLICATION**
published in accordance with Art. 153(4) EPC

(43) Date of publication:
**22.01.2025 Bulletin 2025/04**

(21) Application number: **22931462.0**

(22) Date of filing: **18.03.2022**

(51) International Patent Classification (IPC):
*H04W 72/00* *(2023.01)*

(52) Cooperative Patent Classification (CPC):
**H04W 72/00**

(86) International application number:
**PCT/CN2022/081797**

(87) International publication number:
**WO 2023/173431 (21.09.2023 Gazette 2023/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LUO, Xingyi**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **NEIGHBOR CELL MEASUREMENT METHOD AND APPARATUS, AND DEVICE, MEDIUM AND PROGRAM PRODUCT**

(57) The present disclosure belongs to the field of communications. Disclosed are a neighbor cell measurement method and apparatus, and a device, a medium and a program product. The method comprises: a terminal receiving configuration information of a first measurement window, wherein the first measurement window is used for performing beam measurement on the basis of a reference signal of a neighbor cell; and measuring the reference signal according to the first measurement window, so as to obtain a beam measurement result of the neighbor cell. The method is used for supporting, in L1/L2-based inter-cell mobility, a terminal in implementing dynamic switching between cells on the basis of a beam measurement result of a neighbor cell.

```
┌─────────────────────────────────────────────────────────────┐
│  receiving configuration information of a first measurement  │
│  window, wherein the first measurement window is configured  ├── 210
│  for a beam measurement based on a reference signal of a     │
│  neighboring cell                                            │
└─────────────────────────────────────────────────────────────┘
                               │
                               ▼
┌─────────────────────────────────────────────────────────────┐
│  measuring the reference signal based on the first           │
│  measurement window, to obtain a beam measurement result     ├── 220
│  of the neighboring cell                                     │
└─────────────────────────────────────────────────────────────┘
```

FIG. 2

## Description

### TECHNICAL FIELD

The present disclosure relates to the field of communications and, in particular to a method and an apparatus for a neighbor cell measurement, a device, a medium, and a program product.

### BACKGROUND

In order to reduce mobility latency, it is desired to support an L1/L2 based inter-cell mobility in release 18 (Rel-18) of the 3rd generation partnership project (3GPP).

In the L1/L2 based inter-cell mobility, a network device preconfigures a plurality of candidate cells for a user equipment (UE), and then the UE can implement dynamic switching in the candidate cells through an L1/L2 signaling based on a beam measurement result of the neighbor cell.

Thus, it is necessary for the UE to perform a beam measurement for the neighbor cell in the L1/L2 based inter-cell mobility.

### SUMMARY

A method and an apparatus for a neighbor cell measurement, a device, a medium, and a program product are provided in the embodiments of the present disclosure. The technical solution will be described as follows.

According to an aspect of the embodiments of the present disclosure, a method for a neighbor cell measurement, performed by a terminal, is provided. The method includes: receiving configuration information of a first measurement window, in which the first measurement window is configured for a beam measurement based on a reference signal of a neighbor cell; and measuring the reference signal based on the first measurement window, to obtain a beam measurement result of the neighbor cell.

According to another aspect of the embodiments of the present disclosure, a method for a neighbor cell measurement, performed by a network device, is provided. The method includes: sending configuration information of a first measurement window, in which the first measurement window is configured for a beam measurement based on a reference signal of a neighbor cell; and receiving a beam measurement result of the neighbor cell obtained by a terminal through performing a measurement based on the reference signal.

According to another aspect of the embodiments of the present disclosure, an apparatus for a neighbor cell measurement is provided. The apparatus includes: a first receiving module, configured to receive configuration information of a first measurement window, in which the first measurement window is configured for a beam measurement based on a reference signal of a neighbor cell; and a first processing module, configured to measure the reference signal based on the first measurement window, to obtain a beam measurement result of the neighbor cell.

According to another aspect of the embodiments of the present disclosure, an apparatus for a neighbor cell measurement is provided. The apparatus includes: a second sending module, configured to send configuration information of a first measurement window, in which the first measurement window is configured for a beam measurement based on a reference signal of a neighbor cell; and a second receiving module, configured to receive a beam measurement result of the neighbor cell obtained by a terminal through performing a measurement based on the reference signal.

According to another aspect of the embodiments of the present disclosure, a terminal is provided. The terminal includes: a processor; a transceiver coupled to the processor; in which the processor is configured to load and execute computer-executable instructions to implement the method for a neighbor cell measurement according to any aspect described above.

According to another aspect of the embodiments of the present disclosure, a network device is provided. The network device includes: a processor; a transceiver coupled to the processor; in which the processor is configured to load and execute computer-executable instructions to implement the method for a neighbor cell measurement according to any aspect described above.

According to another aspect of the embodiments of the present disclosure, computer-readable storage medium is provided, the computer-readable storage medium has at least one instruction, at least one program, a code set or an instruction set stored therein. The at least one instruction, the at least one program, the code set or the instruction set is loaded and executed by a processor, to implement the method for a neighbor cell measurement according to any aspect described above.

According to another aspect of the embodiments of the present disclosure, a computer program product (or a computer program) is provided. The computer program product (or the computer program) includes a computer program, which is stored in a computer-readable storage medium. A processor of the computer device reads and executes the computer program from the computer-readable storage medium, to cause the computer device to implement the method for a neighbor cell measurement according to any aspect described above.

The technical solution provided in the embodiments of the present disclosure may include the following beneficial effects.

In the method for a neighbor cell measurement describe above, the terminal determines the first measurement window after receiving the configuration information of the first measurement window, and measures the reference signal based on the first measurement window, to obtain a beam measurement result of the neighbor cell. The method may support the terminal to implement dynamic switching between cells based on the beam measurement result of the neighbor cell in the L1/L2 based inter-cell mobility.

It should be understood that the above general description and the subsequent detailed descriptions are exemplary and explanatory only, and do not limit the present disclosure.

## BRIEF DESCRIPTION OF THE DRAWINGS

In order to more clearly illustrate the technical solutions of the embodiments of the disclosure, the drawings required for use in the description of the embodiments of the disclosure may be briefly introduced below. Obviously, the drawings in the following description are only some embodiments of the disclosure. For those skilled in the art, other drawings can be obtained based on these drawings without creative works.

FIG. 1 is a block diagram illustrating a communication system according to an embodiment of the present disclosure.

FIG. 2 is a flowchart illustrating a method for a neighbor cell measurement according to an embodiment of the present disclosure.

FIG. 3 is a schematic diagram illustrating a measurement window according to an embodiment of the present disclosure.

FIG. 4 is a schematic diagram illustrating a measurement window according to another embodiment of the present disclosure.

FIG. 5 is a flowchart illustrating a method for a neighbor cell measurement according to another embodiment of the present disclosure.

FIG. 6 is a flowchart illustrating a method for a neighbor cell measurement according to another embodiment of the present disclosure.

FIG. 7 is a flowchart illustrating a method for a neighbor cell measurement according to another embodiment of the present disclosure.

FIG. 8 is a flowchart illustrating a method for updating a measurement window according to an embodiment of the present disclosure.

FIG. 9 is a flowchart illustrating a method for updating a reference signal according to an embodiment of the present disclosure.

FIG. 10 is a flowchart illustrating a method for a neighbor cell measurement according to another embodiment of the present disclosure.

FIG. 11 is a flowchart illustrating a method for updating a measurement window according to another embodiment of the present disclosure.

FIG. 12 is a schematic diagram illustrating a correspondence between a beam change rate and a cycle of a measurement window according to an embodiment of the present disclosure.

FIG. 13 is a flowchart illustrating a method for updating a reference signal according to another embodiment of the present disclosure.

FIG. 14 is a block diagram illustrating an apparatus for a neighbor cell measurement according to an embodiment of the present disclosure.

FIG. 15 is a block diagram illustrating an apparatus for a neighbor cell measurement according to another embodiment of the present disclosure.

FIG. 16 is a block diagram illustrating a structure of a terminal according to an embodiment of the present disclosure.

FIG. 17 is a block diagram illustrating a structure of a network device according to an embodiment of the present disclosure.

## DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all possible implementations consistent with the embodiments of the present disclosure. Rather, they are merely examples of devices and methods consistent with aspects of the embodiments of the disclosure as recited in the appended claims.

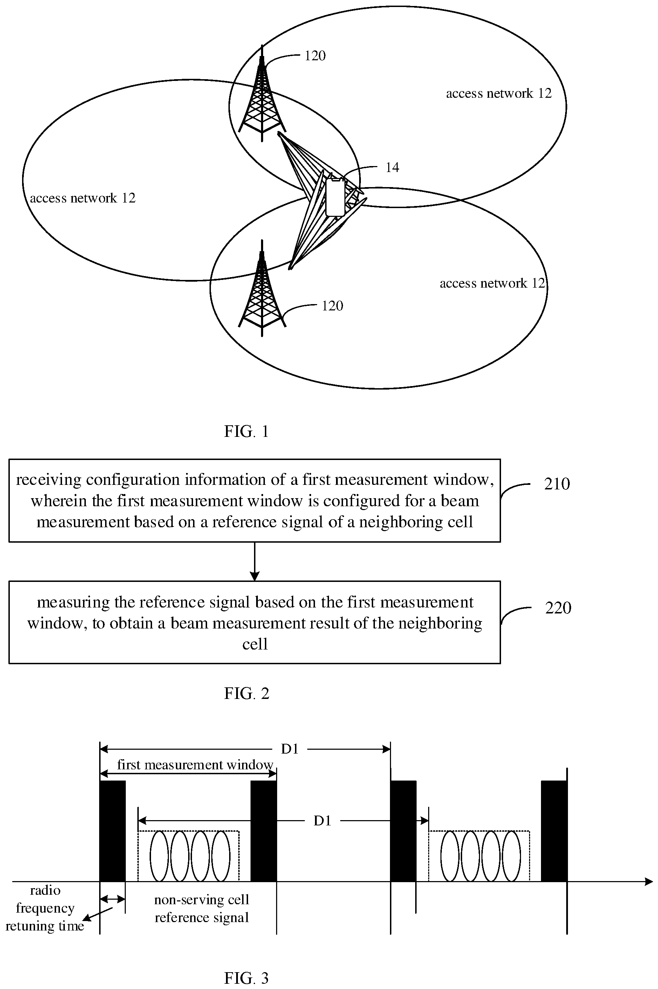

FIG. 1 is a block diagram illustrating a communication system according to an embodiment of the present disclosure. The communication system may include an access network 12 and a user terminal 14.

The access network 12 includes a plurality of network devices 120. The network device 120 (i.e. access network device) may be a base station, in which the base station is a device deployed in the access network to provide wireless communication functionality to the user terminal 14 (referred to as "terminal"). The base station may include various forms of a macro base station, a micro base station, a relay station, an access point, etc. In a system using different wireless access technologies, the name of the device with the base station function may be different, for example, in a long term evolution (LTE) system, the device is called an eNodeB or an eNB, and in a 5G new radio (5G NR) system, the device is called a gNodeB or a gNB. The description "base station" may change as the communication technology evolves. For the convenience of the description in the embodiments of the present disclosure, the apparatus providing wireless communication function for the user terminal 14 as described above is collectively referred to as a network device.

The user terminal 14 may include a plurality of handheld devices, in-vehicle devices, wearable devices, computing devices, or other processing devices connected to a wireless modem, and various forms of user equipment, such as a mobile station (MS), a terminal device, etc., which have wireless communication capabilities. For ease of description, the devices mentioned above are collectively referred to as the user terminal. The network device 120 and the user terminal 14 communicate with each other through a certain air interface technology, such as an Uu interface.

For example, one base station forms a single cell correspondingly, or, one base station forms a plurality of cells (i.e., at least two cells) correspondingly. An overlapping region of beam coverage exists between neighbor cells, and the user terminals 14 within the overlapping region may switch between the cells.

For example, in a case where the user terminal 14 has accessed a cell, in a process of switching from the cell to a neighbor cell of the cell, the user terminal 14 first implements a method for a neighbor cell measurement provided in the embodiments of the present disclosure to perform a beam measurement for the neighbor cell, and then implements dynamic switching between the cells based on a beam measurement result.

The technical solution of the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a new radio (NR) system, an evolution system for an NR system, an LTE-based access to unlicensed spectrum (LTE-U) system, a new radio unlicensed (NR-U) system, an universal mobile telecommunication system (UMTS) system, a worldwide interoperability for microwave access (WiMAX) communication system, wireless local area networks (WLAN), wireless fidelity (WiFi), a next generation communication system, or other communication systems.

In general, a traditional communication system supports a limited number of connections, which is easy to implement, however, as communication technologies evolve, the mobile communication system will support not only traditional communications, but also, for example, device to device (D2D) communication, machine to machine (M2M) communication, machine type communication (MTC) communication, vehicle to vehicle (V2V) communication, and vehicle to everything (V2X) communication, etc. The embodiments of the present disclosure may also be applied to these communication systems.

FIG. 2 is a flowchart illustrating a method for a neighbor cell measurement according to an embodiment of the present disclosure. The method is applied in a terminal of the communication system illustrated in FIG. 1. The method includes the following steps 210 to 220.

At step 210, configuration information of a first measurement window is received, in which the first measurement window is configured for a beam measurement based on a reference signal of a neighbor cell.

The terminal receives the configuration information of the first measurement window (MW) sent from a network device on a physical downlink shared channel (PDSCH). The configuration information is configured to configure a first configuration parameter of the first measurement window for the terminal. For example, the terminal receives the configuration information of the first measurement window sent by the network device through a radio resource control (RRC) signaling.

Optionally, the configuration information of the first measurement window includes at least one of following first configuration parameters: a first length of the first measurement window; a first cycle of the first measurement window; a first offset value of the first measurement window; or a first timing advance (TA) of the first measurement window.

Optionally, the length of the first measurement window is a symbol length occupied by the first measurement window in a time domain. The cycle of the first measurement window is a time interval between start times (or end times) of every two adjacent first measurement windows. The offset value of the first measurement window is an offset value of the first measurement window with regard to a start point of the time domain, that is, a time domain position of the first measurement window is obtained by a position of the start point plus the offset value of the first measurement window. The start point is a time point which is TA milliseconds before the nearest subframe prior to the configuration information of the first measurement window.

Optionally, the reference signal of the neighbor cell includes at least one of: a synchronization signal/physical broadcast channel block (SS/PBCH Block, SSB), or a channel state information reference signal (CSI-RS).

Optionally, the first length of the first measurement window is determined by a duration of the reference signal of the neighbor cell and a radio frequency (RF) retuning time of the terminal. As shown in FIG. 3, which is an example of a measurement window of the neighbor cell, and a time-domain positional relationship among the first measurement window, a non-serving cell reference signal and the RF retuning time is illustrated, in which the non-serving cell is the neighbor cell.

Optionally, the first length of the first measurement window is greater than or equal to a sum of the duration of the reference signal and twice the radio frequency retuning time of the terminal. For example, as shown in FIG. 3, the first length of the first measurement window includes the duration of the reference signal of the neighbor cell and twice the RF retuning time. And one RF retuning time is located before the start time of the reference signal of the neighbor cell, and the other RF retuning time is located after the end time of the reference signal of the neighbor cell.

At step 220, the reference signal is measured based on the first measurement window, to obtain a beam measurement result of the neighbor cell.

For example, the terminal determines the first measurement window based on the configuration information, and measures the reference signal of the neighbor cell within the first measurement window, to obtain the beam measurement result of the neighbor cell.

The terminal periodically measures the reference signal of the neighbor cell based on the first measurement window. Optionally, the first cycle of the first measurement window is different from or the same as a cycle of the reference signal of the neighbor cell. For example, as shown in FIG. 3, the first cycle of the first measurement window and the cycle of the reference signal of the neighbor cell are both D1.

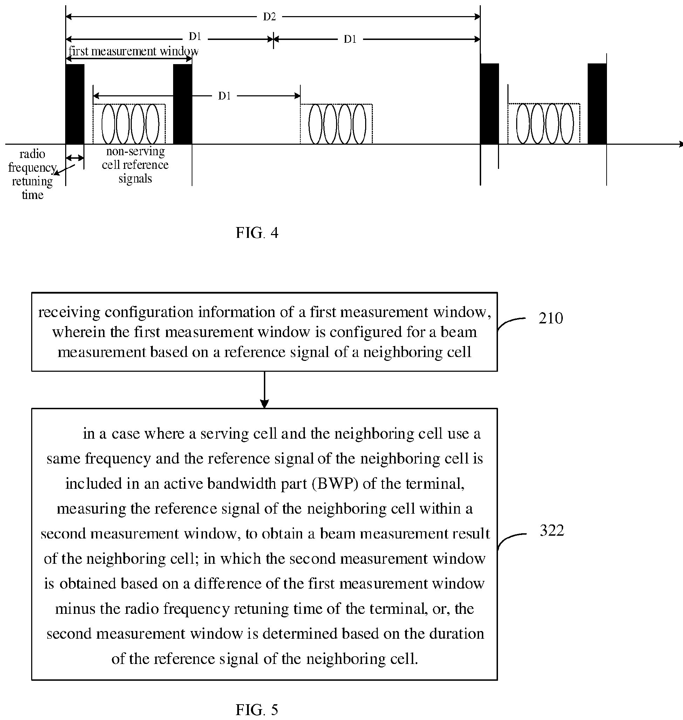

Optionally, in a case where the first cycle of the first measurement window is different from the cycle of the reference signal of the neighbor cell, the first cycle of the first measurement window is an integer multiple of the cycle of the reference signal of the neighbor cell. For example, as shown in FIG. 4, a first cycle D2 of the first measurement window is twice the cycle D1 of the reference signal of the neighbor cell.

For example, the beam measurement result of the neighbor cell is reported to the network device by the terminal after obtaining the beam measurement result. And the network device determines to switch or not to switch the serving cell of the terminal based on the beam measurement result.

In conclusion, in the method for a neighbor cell measurement provided in the embodiments, the terminal determines the first measurement window after receiving the configuration information of the first measurement window, and measures the reference signal based on the first measurement window, to obtain the beam measurement result of the neighbor cell. The method may support the terminal to implement dynamic switching between cells based on the beam measurement result of the neighbor cell in the L1/L2 based inter-cell mobility. And the network device may obtain the beam measurement result of the neighbor cell in time, so that the switching of the serving cell of the terminal is implemented through a dynamic signaling, and a time delay overhead of the mobility problem is reduced.

The serving cell and the neighbor cell of the terminal may use the same frequency or use different frequencies. For example, as shown in FIG. 5, in a case where the serving cell and the neighbor cell of the terminal use the same frequency, the above step 220 may be implemented by the following step 322.

At step 322, in a case where the serving cell and the neighbor cell use the same frequency and the reference signal of the neighbor cell is included in an active bandwidth part (BWP) of the terminal, the reference signal of the neighbor cell is measured within a second measurement window, to obtain a beam measurement result of the neighbor cell; in which the second measurement window is obtained based on a difference of the first measurement window minus the radio frequency retuning time of the terminal, or, in which the second measurement window is determined based on the duration of the reference signal of the neighbor cell.

The serving cell and the neighbor cell may be different cells corresponding to the same network device, or the serving cell and the neighbor cell may be different cells corresponding to different network devices.

For determination of the second measurement window, the terminal subtracts twice the radio frequency retuning time of the terminal from the first measurement window to obtain the second measurement window.

Optionally, the second measurement window is determined by the terminal based on the duration of the reference signal of the neighbor cell. For example, the terminal determines the duration of the reference signal of the neighbor cell as a duration of the second measurement window and determines the second measurement window based on the duration of the second measurement window.

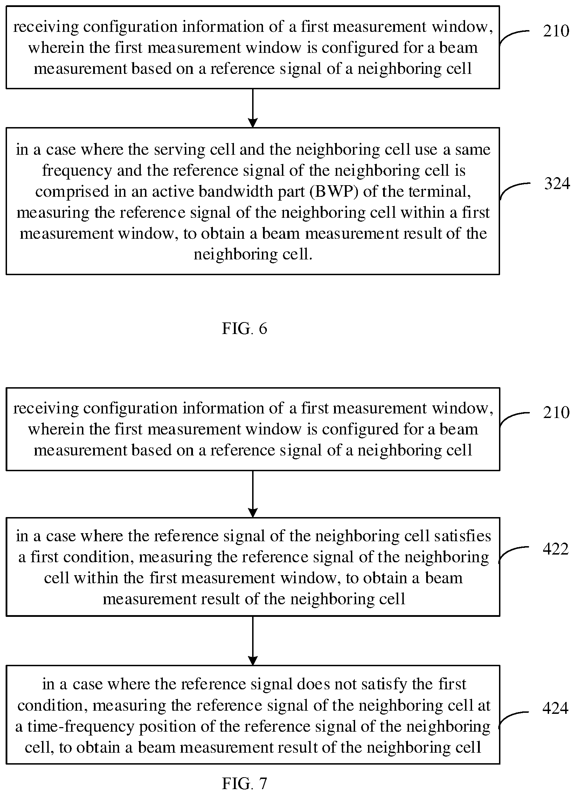

For example, as shown in FIG. 6, in a case where the serving cell and the neighbor cell of the terminal use the same frequency, the above step 220 may also be implemented by the following step 324.

At step 324, in a case where the serving cell and the neighbor cell use the same frequency and the reference signal of the neighbor cell is included in an active bandwidth part (BWP) of the terminal, the reference signal of the neighbor cell is measured within a first measurement window, to obtain a beam measurement result of the neighbor cell.

It should be noted that the step 322 and the step 324 are interchangeable to each other. The window measured by the measurement method in the step 322 has a shorter length relative to the measurement method in the step 324. And the measurement resources consumed by the measurement method in the step 322 are less relative to the measurement method in the step 324.

For example, as shown in FIG. 7, in the case where the servicing cell and the neighbor cell of the terminal use the same frequency or use different frequencies, the above step 220 may be implemented by the following steps 422 to 424.

At step 422, in a case where the reference signal of the neighbor cell satisfies a first condition, the reference signal of the neighbor cell is measured within the first measurement window, to obtain a beam measurement result of the neighbor cell.

For example, the first condition is preconfigured for the terminal by the network device; or, the first condition is predefined by the protocol.

In the case where the reference signal of the neighbor cell satisfies the first condition, the terminal determines the first measurement window based on the configuration information of the first measurement window; and measures the reference signal of the neighbor cell within the first measurement window.

Optionally, the first condition includes any one of: the serving cell and the neighbor cell using different frequencies; or, the serving cell and the neighbor cell using the same frequency and the reference signal being not fully included in an active BWP of the terminal.

For example, in a case where the serving cell and the neighbor cell use different frequencies, the terminal measures the reference signal of the neighbor cell within the first measurement window. Or, in the case where the serving cell and the neighbor cell use the same frequency, and the reference signal of the neighbor cell is not fully included in the active BWP of the terminal, the terminal measures the reference signal of the neighbor cell within the first measurement window.

At step 424, in a case where the reference signal does not satisfy the first condition, the reference signal of the neighbor cell is measured at a time-frequency position of the reference signal of the neighbor cell, to obtain a beam measurement result of the neighbor cell.

For example, the terminal determines that the serving cell and the neighbor cell use the same frequency and that the reference signal of the neighbor cell is fully included in the active BWP of the terminal, the terminal measures the reference signal of the neighbor cell at the time-frequency position of the reference signal of the neighbor cell, to obtain the beam measurement result of the neighbor cell.

In the case where the reference signal does not satisfy the first condition, the measurement is performed directly at the time-frequency position of the reference signal of the neighbor cell. The modification of the protocol is reduced in this method and the computational resource occupation is reduced since the terminal does not need to compute the measurement window.

In conclusion, in the method for a neighbor cell measurement provided in the embodiments, under the consideration of the case where the serving cell and the neighbor cell use the same frequency and the case where the serving cell and the neighbor cell use different frequencies, the conflict problem of the channel/signal of the serving cell and the neighbor cell of the terminal and the involved problem of the radio frequency retuning time are solved. It should be noted that the terminal does not need to receive data from the service cell within the measurement window.

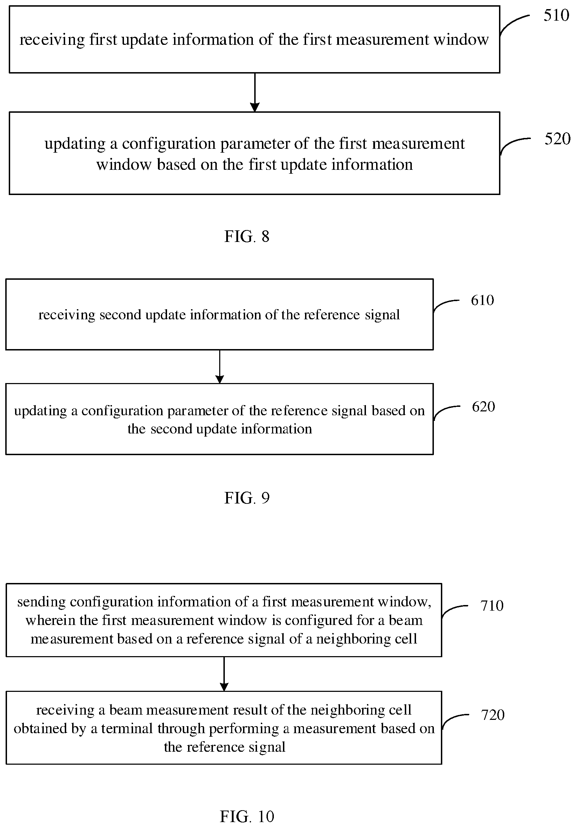

In some embodiments, in a process of the neighbor cell measurement, the terminal may also update the first measurement window. For example, as shown in FIG. 8, the steps of updating the first measurement window includes the following steps 510 to 520.

At step 510, first update information of the first measurement window is received.

The terminal receives the first update information sent from the network device. Optionally, the first update information is carried in a medium access control (MAC) control element (CE) signaling, i.e., the terminal receives the first update information sent by the network device through the MAC CE signaling.

Optionally, the first update information includes at least: a measurement configuration identification (ID) associated with the neighbor cell; and a second configuration parameter of the first measurement window.

For example, the second configuration parameter of the first measurement window includes a second cycle of the first measurement window.

Optionally, the second configuration parameter may further include at least one of: a second length of the first measurement window; a second offset value of the first measurement window; or a second timing advance of the first measurement window.

It should be noted that in the embodiments of the present disclosure, the update of the configuration parameter of the first measurement window is illustrated by taking the update of the cycle of the first measurement window as an example. For example, the second cycle of the first measurement window is the same as or different from the cycle of the reference signal of the neighbor cell. In a case where the second cycle of the first measurement window is different from the cycle of the reference signal of the neighbor cell, the second cycle of the first measurement window is an integer multiple of the cycle of the reference signal of the neighbor cell.

At step 520, a configuration parameter of the first measurement window is updated based on the first update information.

The terminal updates the configuration parameter of the first measurement window based on the first update information, and obtains the updated first measurement window. And the terminal measures the reference signal of the neighbor cell based on the updated first measurement window to obtain the beam measurement result of the neighbor cell, and reports the beam measurement result of the neighbor cell to the network device. For example, the terminal updates the first cycle of the first measurement window to a second cycle and obtains the updated first measurement window.

In conclusion, in the method for a neighbor cell measurement provided in the embodiments, the cycle of the first measurement window is updated based on the first update information configured by the network device, the measurement cycle of the beam of the neighbor cell and the reporting cycle of the beam measurement result are adjusted for the dynamically changed moving speed of the terminal, to support a beam measurement of the neighbor cell by the terminal at different moving speeds. For example, in a case where the moving speed of the terminal is large, the cycle of the measurement window is updated to a smaller value; and in a case where the moving speed of the terminal is small, the cycle of the measurement window is updated to a larger value.

In other embodiments, in the process of the neighbor cell measurement, the reference signal of the neighbor cell may also be updated. For example, as shown in FIG. 9, the steps of updating the reference signal of the neighbor cell includes the following steps 610 to 620.

At step 610, second update information of the reference signal is received.

The terminal receives the second update information sent from the network device. Optionally, the second update information is carried in a radio resource control (RRC) signaling. For example, the terminal receives the second update information sent by the network device through the RRC signaling.

At step 620, a configuration parameter of the reference signal of the neighbor cell is updated based on the second update information.

The configuration parameter of the reference signal of the neighbor cell includes a first time-frequency resource of the reference signal of the neighbor cell and the first measurement window information corresponding to the reference signal of the neighbor cell before the configuration parameter of the reference signal of the neighbor cell is updated. And the time domain cycle corresponding to the first time-frequency resource matches the moving speed of the terminal.

For example, the second update information includes a second time-frequency resource of the reference signal of the neighbor cell. The time-domain cycle corresponding to the second time-frequency resource matches the moving speed of the terminal, so that the user may obtain the beam measurement result in time.

For example, the second update information further includes the second measurement window information corresponding to the reference signal of the neighbor cell, to enable the cycle of the first measurement window of the terminal to be the same as the cycle of the reference signal of the neighbor cell, or the cycle of the first measurement window to be an integer multiple of the cycle of the reference signal of the neighbor cell.

The terminal updates the first time-frequency resource of the reference signal of the neighbor cell to the second time-frequency resource, and updates the first measurement window information of the reference signal of the neighbor cell to the second measurement window information.

In conclusion, in the method for a neighbor cell measurement provided in the embodiments, a beam measurement of the neighbor cell is supported when the reference signal of the neighbor cell changes dynamically. For example, in a case where an initially configured cycle of a reference signal of the neighbor cell measurement is large, and the measurement result cannot be obtained in time in case the user is moving too fast, the measurement configuration may be updated through the RRC signaling.

FIG. 10 is a flowchart illustrating a method for a neighbor cell measurement according to an embodiment of the present disclosure. The method is applied in a network device of the communication system illustrated in FIG. 1. The method includes the following steps 710 to 720.

At step 710, configuration information of a first measurement window is sent, in which the first measurement window is configured for a beam measurement based on a reference signal of a neighbor cell.

The network device configures the configuration information of the first measurement window for the terminal, and sends the configuration information of the first measurement window to the terminal.

Optionally, the configuration information of the first measurement window includes at least one of following first configuration parameters: a first length of the first measurement window; a first cycle of the first measurement window; a first offset value of the first measurement window; or a first timing advance of the first measurement window.

Optionally, the first length of the first measurement window is determined by a duration of the reference signal of the neighbor cell and a radio frequency retuning time of the terminal. For example, the network device determines the first length of the first measurement window based on the duration of the reference signal of the neighbor cell and the radio frequency retuning time of the terminal.

Optionally, the first length of the first measurement window is greater than or equal to a sum of the duration of the reference signal of the neighbor cell and twice the radio frequency retuning time of the terminal. For example, the network device determines the first length of the first measurement window to be greater than or equal to a sum of the duration of the reference signal of the neighbor cell and twice the radio frequency retuning time of the terminal.

Optionally, the first cycle of the first measurement window is different from or the same as a cycle of the reference signal of the neighbor cell. For example, the network device determines the first cycle of the first measurement window to be the same as the cycle of the reference signal of the neighbor cell.

Optionally, in a case where the first cycle of the first measurement window is different from the cycle of the reference signal of the neighbor cell, the first cycle of the first measurement window is an integer multiple of the cycle of the reference signal of the neighbor cell. For example, the network device determines the first cycle of the first measurement window to be G times the cycle of the reference signal of the neighbor cell, and the value of G is an integer greater than 1.

At step 720, a beam measurement result of the neighbor cell obtained by the terminal through performing a measurement based on the reference signal measurement of the neighbor cell is received.

In conclusion, in the method for a neighbor cell measurement provided in the embodiments, the network device configures the configuration parameter of the first measurement window for the terminal. The method may support the terminal to implement the beam measurement of the neighbor cell and dynamic switching between cells in the L1/L2 based inter-cell mobility.

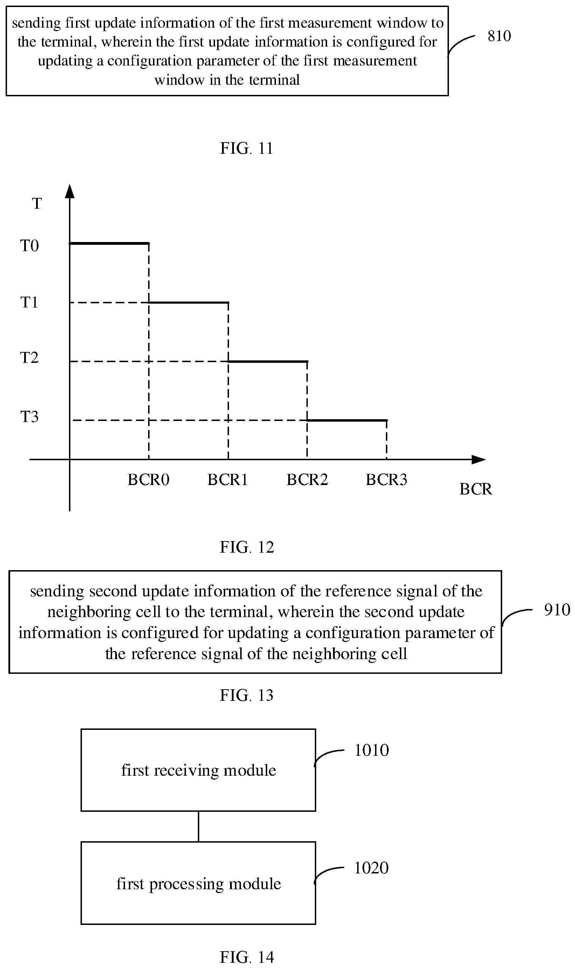

In some embodiments, in a process of a neighbor cell measurement, the network device configures first update information of the first measurement window for the terminal. As shown in FIG. 11, the process includes the following step 810.

At step 810, the first update information of the first measurement window is sent to the terminal, in which the first update information is configured for updating a configuration parameter of the first measurement window in the terminal.

Optionally, the first update information is carried in a medium access control (MAC) control element (CE) signaling, i. e., the first update information is sent to the terminal by the network device through MAC CE signaling.

Optionally, the first update information includes at least: a measurement configuration identification (ID) associated with the neighbor cell; and a second configuration parameter of the first measurement window.

For example, the second configuration parameter of the first measurement window includes a second cycle of the first measurement window.

Optionally, the second configuration parameter may further include at least one of: a second length of the first measurement window; a second offset value of the first measurement window; or a second timing advance of the first measurement window.

Optionally, the beam measurement result includes a resource indicator (RI) of a reference signal corresponding to an optimal beam. A beam change rate is calculated by the network device based on the resource indicator of the reference signal corresponding to the optimal beam. And in response to the beam change rate being changed, the first update information of the first measurement window is determined based on a correspondence, in which the correspondence includes a correspondence between the beam change rate and the configuration parameter of the first measurement window.

For example, as shown in FIG. 12, a correspondence between the beam change rate and the cycle of the first measurement window is illustrated. For example, in a case where the beam change rate is greater than 0 and less than or equal to BCR0, the cycle of the first measurement window is T0. In a case where the beam change rate is greater than BCR0 and less than or equal to BCR1, the cycle of the first measurement window is T1. Or, in a case where the beam change rate is greater than or equal to 0 and less than BCR0, the cycle of the first measurement window is T0. In a case where the rate of change of the beam is greater than or equal to BCR0 and less than BCR1, then the cycle of the first measurement window is T1.

Optionally, fir the beam change rate, the network device calculates a difference between a first resource indicator $RI_i$ and a second resource indicator $RI_{i-1}$, in which the first resource indicator is the resource indicator of the reference signal corresponding to the optimal beam in an i-th reporting, and the second resource indicator is the resource indicator of the reference signal corresponding to the optimal beam in an (i-1)-st reporting, and i is a positive integer greater than 1; and calculates a ratio of the difference to the cycle of the first measurement window as the beam change rate (BCR).

For example, the formula for calculating the beam change rate is expressed as:

$$BCR_i = \left| \frac{RI_i - RI_{i-1}}{T_i} \right|$$

For example, in a case where the configuration parameter of the first measurement window is updated, and the cycle of the first measurement window is the first cycle, the configuration parameter in the above calculation process is the second cycle.

In conclusion, in the method for a neighbor cell measurement provided in the embodiments, the network device configures, for the terminal, the first update information for updating the cycle of the first measurement window, adjusts the measurement cycle of the beam of the neighbor cell and the reporting cycle of the beam measurement result for the dynamically changed moving speed of the terminal, so as to support a beam measurement of the neighbor cell by the terminal at different moving speeds.

In some embodiments, in the process of the neighbor cell measurement, the network device configures the second update information of the reference signal of the neighbor cell for the terminal. As shown in FIG. 13, the process includes the following step 910.

At step 910, the second update information of the reference signal of the neighbor cell is sent to the terminal, in which the second update information is configured for updating a configuration parameter of the reference signal of the neighbor cell.

Optionally, the second update information is carried in a radio resource control (RRC) signaling. For example, the network device sends the second update information of the reference signal of the neighbor cell to the terminal through the RRC signaling.

The configuration parameter of the reference signal of the neighbor cell includes a first time-frequency resource of the reference signal of the neighbor cell and the first measurement window information corresponding to the reference signal of the neighbor cell before the configuration parameter of the reference signal of the neighbor cell is updated. And the time domain cycle corresponding to the first time-frequency resource matches the moving speed of the terminal.

For example, the second update information includes a second time-frequency resource of the reference signal of the neighbor cell. The time-domain cycle corresponding to the second time-frequency resource matches the moving speed of the terminal, so that the user may obtain the beam measurement result in time..

For example, the second update information further includes the second measurement window information corresponding to the reference signal of the neighbor cell, to enable the cycle of the first measurement window of the terminal to be the same as the cycle of the reference signal of the neighbor cell, or the cycle of the first measurement window to be an integer multiple of the cycle of the reference signal of the neighbor cell.

In conclusion, in the method for a neighbor cell measurement provided in the embodiments, a beam measurement of the neighbor cell is supported when the reference signal of the neighbor cell changes dynamically. For example, in a case where an initially configured cycle of a reference signal of the neighbor cell measurement is large, and the measurement result cannot be obtained in time in case the user is moving too fast, the measurement configuration may be updated through the RRC signaling.

FIG. 14 is a block diagram illustrating an apparatus for a neighbor cell measurement according to an embodiment of the present disclosure. The apparatus may be implemented as part or all of an UE through a software, a hardware, or a combination of the software and the hardware. The apparatus includes a first receiving module 1010 and a first processing module 1020.

The first receiving module 1010 is configured to receive configuration information of a first measurement window, in which the first measurement window is configured for a beam measurement based on a reference signal of a neighbor cell.

The first processing module 1020 is configured to measure the reference signal based on the first measurement window, to obtain a beam measurement result of the neighbor cell.

In some embodiments, the configuration information of the first measurement window includes at least one of following first configuration parameters: a first length of the first measurement window; a first cycle of the first measurement window; a first offset value of the first measurement window; or a first timing advance of the first measurement window.

In some embodiments, the first length of the first measurement window is determined by a duration of the reference signal and a radio frequency retuning time of the terminal.

In some embodiments, the first length of the first measurement window is greater than or equal to a sum of the duration of the reference signal and twice the radio frequency retuning time of the terminal.

In some embodiments, the first processing module 1020 is configured to, in a case where a serving cell and the neighbor cell use the same frequency and the reference signal is included in an active bandwidth part (BWP) of the terminal, measure the reference signal within a second measurement window; in which the second measurement window is obtained based on a difference of the first measurement window minus the radio frequency retuning time of the terminal, or, in which the second measurement window is determined based on the duration of the reference signal.

In some embodiments, the first processing module 1020 is configured to, in a case where the reference signal satisfies a first condition, measure the reference signal within the first measurement window; and in a case where the reference signal does not satisfy the first condition, measure the reference signal at a time-frequency position of the reference signal.

In some embodiments, the first condition includes any one of: the serving cell and the neighbor cell using different frequencies; or, the serving cell and the neighbor cell using the same frequency and the reference signal being not fully included in an active BWP of the terminal.

In some embodiments, the first cycle of the first measurement window is different from or the same as a cycle of the reference signal.

In some embodiments, in a case where the first cycle of the first measurement window is different from the cycle of the reference signal, the first cycle of the first measurement window is an integer multiple of the cycle of the reference signal.

In some embodiments, the first receiving module 1010 is configured to receive first update information of the first measurement window; and the first processing module 1020 is configured to update a configuration parameter of the first measurement window based on the first update information.

In some embodiments, the first update information includes a measurement configuration identification (ID) associated with the neighbor cell; and a second configuration parameter of the first measurement window.

In some embodiments, the first update information is carried in a medium access control (MAC) control element (CE) signaling.

In some embodiments, the first receiving module 1010 is configured to receive second update information of the reference signal; and the first processing module 1020 is configured to update a configuration parameter of the reference signal based on the second update information.

In some embodiments, the second update information is carried in a RRC signaling.

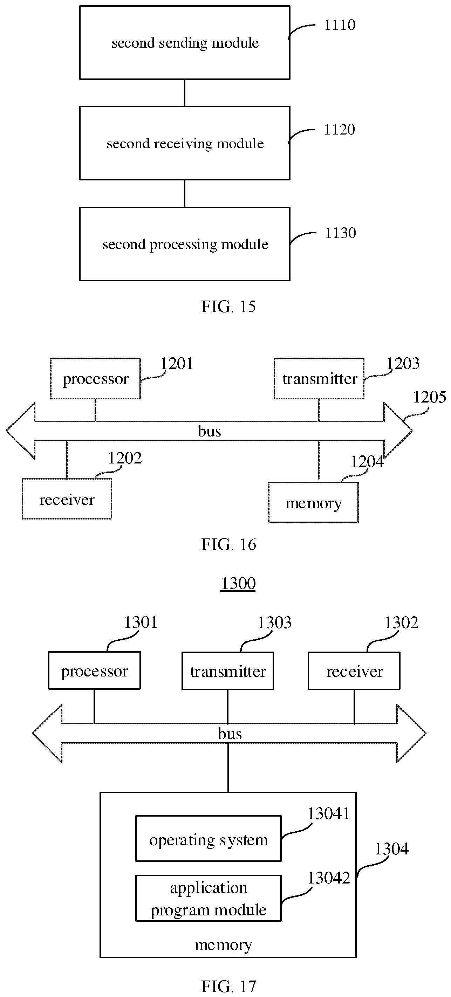

FIG. 15 is a block diagram illustrating an apparatus for a neighbor cell measurement according to an embodiment of the present disclosure. The apparatus may be implemented as part or all of a network device through a software, a hardware, or a combination of the software and the hardware. The apparatus includes a second sending module 1110, a second receiving module 1120, and a second processing module 1130.

The sending module 1110 is configured to send configuration information of a first measurement window, in which the first measurement window is configured for a beam measurement based on a reference signal of a neighbor cell.

The second receiving module 1120 is configured to receive a beam measurement result of the neighbor cell obtained by a terminal through performing a measurement based on the reference signal.

In some embodiments, the configuration information of the first measurement window includes at least one of following first configuration parameters: a first length of the first measurement window; a first cycle of the first measurement window; a first offset value of the first measurement window; or a first timing advance of the first measurement window.

In some embodiments, the first length of the first measurement window is determined by a duration of the reference signal and a radio frequency retuning time of the terminal.

In some embodiments, the first length of the first measurement window is greater than or equal to a sum of the duration of the reference signal and twice the radio frequency retuning time of the terminal.

In some embodiments, the first cycle of the first measurement window is different from or the same as a cycle of the reference signal.

In some embodiments, in a case where the first cycle of the first measurement window is different from the cycle of the reference signal, the first cycle of the first measurement window is an integer multiple of the cycle of the reference signal.

In some embodiments, the second sending module 1110 is configured to send first update information of the first measurement window to the terminal, in which the first update information is configured for updating a configuration parameter of the first measurement window in the terminal.

In some embodiments, the first update information includes: a measurement configuration identification (ID) associated with the neighbor cell; and a second configuration parameter of the first measurement window.

In some embodiments, the beam measurement result includes a resource indicator of a reference signal corresponding to an optimal beam. The apparatus further includes the second processing module 1130.

The second processing module 1130 is configured to calculate a beam change rate based on the resource indicator of the reference signal corresponding to the optimal beam; and in response to the beam change rate being changed, determining the first update information of the first measurement window based on a correspondence; in which the correspondence includes a correspondence between the beam change rate and the configuration parameter of the first measurement window.

In some embodiments, the second processing module 1130 is configured to calculate a difference between a first resource indicator and a second resource indicator, in which the first resource indicator is the resource indicator of the reference signal corresponding to the optimal beam in an i-th reporting, and in which the second resource indicator is the resource indicator of the reference signal corresponding to the optimal beam in an (i-1)-st reporting, and in which i is a positive integer greater than 1; and calculate a ratio of the difference to the cycle of the first measurement window as the beam change rate.

In some embodiments, the first update information is carried in a medium access control (MAC) control element (CE) signaling.

In some embodiments, the second sending module 1110 is configured to send second update information of the reference signal to the terminal, in which the second update information is configured for updating a configuration parameter of the reference signal.

In some embodiments, the second update information is carried in a radio resource control (RRC) signaling.

FIG. 16 is a schematic diagram illustrating a structure of an UE according to an embodiment of the present disclosure. The UE includes a processor 1201, a receiver 1202, a transmitter 1203, a memory 1204, and a bus 1205.

The processor 1201 includes one or more processing cores, and the processor 1201 performs various functional applications and information processing through running the software program and the module.

The receiver 1202 and the transmitter 1203 may be implemented as a communication component, which may be a communication chip.

The memory 1204 is connected to the processor 1201 through the bus 1205.

The memory 1204 may be configured to store at least one instruction. And the processor 1201 is configured to execute the at least one instruction, which is to implement the various steps in the method embodiments described above.

In addition, the memory 1204 may be implemented by any type of volatile or non-volatile storage device or a combination thereof. The volatile or non-volatile storage device includes, but not limited to: a disk or optical disk, an electrically erasable programmable read only memory (EEPROM), an erasable programmable read only memory (EPROM), a static random-access memory (SRAM), a read only memory (ROM), a magnetic memory, a flash memory, or a programmable read only memory (PROM).

In an embodiment, a non-transitory computer-readable storage medium including instructions, e.g., a memory including instructions, is also provided. The instructions may be executable by a processor of the UE to accomplish the method for a neighbor cell measurement described above. For example, the non-transitory computer-readable storage medium may be a ROM, a random-access memory (RAM), a compact disc read-only memory (CD-ROM), a magnetic tape, a floppy disk, or an optical data storage device, etc.

A non-transitory computer-readable storage medium stores instructions which, when executed by a processor of an UE, enable the UE to implement the method for a neighbor cell measurement described above.

FIG. 17 is a block diagram illustrating a structure of a network device 1300 according to an embodiment of the present disclosure. The network device 1300 may be a base station.

The network device 1300 may include: a processor 1301, a receiver 1302, a transmitter 1303, and a memory 1304. The receiver 1302, the transmitter 1303, and the memory 1304 are connected to the processor 1301 through a bus respectively.

The processor 1301 includes one or more processing cores. The processor 1301 implements the method for a neighbor cell measurement provided in embodiments of the present disclosure by running a software program and a module. The memory 1304 may be configured to store the software program and the module. In particular, the memory 1304 may store an operating system 13041, an application program module 13042 required for at least one function. The receiver 1302 is configured to receive communication data sent from other devices. And the transmitter 1303 is configured to send communication data to other devices.

A computer-readable storage medium is also provided in an embodiment of the present disclosure, the computer-readable storage medium having stored at least one instruction, at least one program, at least one code set or at least one instruction set, in said computer-readable storage medium that, when loaded and executed by a processor, implements the method for a neighbor cell measurement according to any embodiments described above.

A computer program product is also provided in an embodiment of the present disclosure, the computer program product (or the computer program) includes a computer program, which is stored in the readable storage medium, at least one processor of the computer device reading and executing the computer program from the readable storage medium, enabling the computer device to perform the method for a neighbor cell measurement according to any embodiments described above.

It is appreciated that "several" mentioned in the disclosure may refer to one or more, and "plurality" or "multiple" may refer to two or more. The term "and/or" may describe association relationships of associated objects, indicating that there may be three types of relationships, for example, A and/or B, which may mean: A exists alone, A and B exist at the same time, and B exists alone. The character "/" generally indicates that the associated objects before and after are in an "or" relationship.

It is further appreciated that the terms "first", "second", etc., are used to describe various types of information, but such information should not be limited to these terms. These terms are only configured to distinguish the same type of information from one another and do not indicate a particular order or level of importance. Indeed, the expressions "first", "second", etc. may be used completely interchangeably. For example, without departing from the scope of the present disclosure, a first message frame may also be referred to as a second message frame, and similarly, a second message frame may be referred to as a first message frame.

It will further be appreciated that embodiments of the present disclosure, while describing the operations in a particular order in the accompanying drawings, should not be construed as requiring that the operations be performed in the particular order shown or in a serial order, or that all of the operations shown be performed.

Other implementations of the embodiments of the disclosure will be readily apparent to those skilled in the art from consideration of the specification and practice of the disclosure disclosed herein. This application is intended to cover any modification, use or adaptation of the embodiments of the present disclosure, these modifications, uses or adaptations follow the general principles of the embodiments of the present disclosure and include those in the technical field not disclosed by the embodiments of the present disclosure Common knowledge or common technical means. The specification and examples are to be considered exemplary only, with a true scope and spirit of the embodiments of the disclosure being indicated by the following claims.

It is appreciated that the embodiments of the present disclosure are not limited to the precise structures described above and shown in the drawings, and various modifications and changes can be made without departing from the scope thereof. The scope of embodiments of the present disclosure is limited only by the appended claims.

## Claims

1. A method for a neighbor cell measurement, performed by a terminal, comprising:

    receiving configuration information of a first measurement window, wherein the first measurement window is configured for a beam measurement based on a reference signal of a neighbor cell; and
    measuring the reference signal based on the first measurement window, to obtain a beam measurement result of the neighbor cell.

2. The method according to claim 1, wherein the configuration information of the first measurement window comprises at least one of following first configuration parameters:

    a first length of the first measurement window;
    a first cycle of the first measurement window;
    a first offset value of the first measurement window; or
    a first timing advance of the first measurement window.

**3.** The method according to claim 2, wherein the first length of the first measurement window is determined by a duration of the reference signal and a radio frequency retuning time of the terminal.

**4.** The method according to claim 3, wherein the first length of the first measurement window is greater than or equal to a sum of the duration of the reference signal and twice the radio frequency retuning time of the terminal.

**5.** The method according to claim 1, wherein measuring the reference signal based on the first measurement window comprises:

in a case where a serving cell and the neighbor cell use the same frequency and the reference signal is comprised in an active bandwidth part (BWP) of the terminal, measuring the reference signal within a second measurement window; wherein the second measurement window is obtained based on a difference of the first measurement window minus a radio frequency retuning time of the terminal, or, the second measurement window is determined based on a duration of the reference signal.

**6.** The method according to claim 1, wherein measuring the reference signal based on the first measurement window comprises:

in a case where the reference signal satisfies a first condition, measuring the reference signal within the first measurement window; and in a case where the reference signal does not satisfy the first condition, measuring the reference signal at a time and frequency position of the reference signal.

**7.** The method according to claim 6, wherein the first condition comprises any one of:

the serving cell and the neighbor cell using different frequencies; or, the serving cell and the neighbor cell using the same frequency and the reference signal being not fully comprised in an active BWP of the terminal.

**8.** The method according to claim 2, wherein the first cycle of the first measurement window is different from or the same as a cycle of the reference signal.

**9.** The method according to claim 8, wherein in a case where the first cycle of the first measurement window is different from the cycle of the reference signal, the first cycle of the first measurement window is an integer multiple of the cycle of the reference signal.

**10.** The method according to claim 1, further comprising:

receiving first update information of the first measurement window; and updating a configuration parameter of the first measurement window based on the first update information.

**11.** The method according to claim 10, wherein the first update information comprises:

a measurement configuration identification (ID) associated with the neighbor cell; and a second configuration parameter of the first measurement window.

**12.** The method according to claim 10 or 11, wherein the first update information is carried in a medium access control (MAC) control element (CE) signaling.

**13.** The method according to claim 1, further comprising:

receiving second update information of the reference signal; and updating a configuration parameter of the reference signal based on the second update information.

**14.** The method according to claim 13, wherein the second update information is carried in a radio resource control (RRC) signaling.

**15.** A method for a neighbor cell measurement, performed by a network device, comprising:

sending configuration information of a first measurement window, wherein the first measurement window is configured for a beam measurement based on a reference signal of a neighbor cell; and receiving a beam measurement result of the neighbor cell obtained by a terminal through performing a measurement based on the reference signal.

**16.** The method according to claim 15, wherein the configuration information of the first measurement window comprises at least one of following first configuration parameters:

a first length of the first measurement window; a first cycle of the first measurement window; a first offset value of the first measurement window; or

a first timing advance of the first measurement window.

17. The method according to claim 16, wherein the first length of the first measurement window is determined by a duration of the reference signal and a radio frequency retuning time of the terminal.

18. The method according to claim 17, wherein the first length of the first measurement window is greater than or equal to a sum of the duration of the reference signal and twice the radio frequency retuning time of the terminal.

19. The method according to claim 16, wherein the first cycle of the first measurement window is different from or the same as a cycle of the reference signal.

20. The method according to claim 19, wherein in a case where the first cycle of the first measurement window is different from the cycle of the reference signal, the first cycle of the first measurement window is an integer multiple of the cycle of the reference signal.

21. The method according to claim 15, further comprising:

    sending first update information of the first measurement window to the terminal,
    wherein the first update information is configured for updating a configuration parameter of the first measurement window in the terminal.

22. The method according to claim 21, wherein the first update information comprises:

    a measurement configuration identification (ID) associated with the neighbor cell; and
    a second configuration parameter of the first measurement window.

23. The method according to claim 21, wherein the beam measurement result comprises a resource indicator of a reference signal corresponding to an optimal beam;
    the method further comprises:

    calculating a beam change rate based on the resource indicator of the reference signal corresponding to the optimal beam; and
    in response to the beam change rate being changed, determining the first update information of the first measurement window based on a correspondence;
    wherein the correspondence comprises a correspondence between the beam change rate and the configuration parameter of the first measurement window.

24. The method according to claim 23, wherein calculating the beam change rate based on the resource indicator of the reference signal corresponding to the optimal beam comprises:

    calculating a difference between a first resource indicator and a second resource indicator, wherein the first resource indicator is the resource indicator of the reference signal corresponding to the optimal beam in an i-th reporting, and wherein the second resource indicator is the resource indicator of the reference signal corresponding to the optimal beam in an (i-1)-st reporting, and wherein i is a positive integer greater than 1;
    and
    calculating a ratio of the difference to the cycle of the first measurement window as the beam change rate.

25. The method according to claim 21 to 24, wherein the first update information is carried in a medium access control (MAC) control element (CE) signaling.

26. The method according to claim 15, further comprising:
    sending second update information of the reference signal to the terminal, wherein the second update information is configured for updating a configuration parameter of the reference signal.

27. The method according to claim 26, wherein the second update information is carried in a radio resource control (RRC) signaling.

28. An apparatus for a neighbor cell measurement, comprising:

    a first receiving module, configured to receive configuration information of a first measurement window, wherein the first measurement window is configured for a beam measurement based on a reference signal of a neighbor cell; and
    a first processing module, configured to measure the reference signal based on the first measurement window, to obtain a beam measurement result of the neighbor cell.

29. An apparatus for a neighbor cell measurement, comprising:

    a second sending module, configured to send configuration information of a first measurement window, wherein the first measurement window is configured for a beam measurement based on a reference signal of a neighbor cell; and
    a second receiving module, configured to receive a beam measurement result of the neighbor cell obtained by a terminal through performing a measurement based on the reference signal.

30. A terminal, comprising:

a processor;
a transceiver coupled to the processor;
wherein the processor is configured to load and execute computer-executable instructions to implement the method for neighbor cell measurement according to any one of claims 1 to 14.

31. A network device, comprising:

a processor;
a transceiver coupled to the processor;
wherein the processor is configured to load and execute computer-executable instructions to implement the method for neighbor cell measurement according to any one of claims 15 to 27.

32. A computer-readable storage medium having stored at least one instruction, at least one program, at least one code set or at least one instruction set, in said computer-readable storage medium that, when loaded and executed by a processor, implements the method for neighbor cell measurement according to any one of claims 1 to 14, or, the method for neighbor cell measurement according to any one of claims 15 to 27.

33. A computer program product, comprises a computer program, which is stored in the readable storage medium, at least one processor of the computer device reading and executing the computer program from the readable storage medium, enabling the computer device to perform the method for neighbor cell measurement according to any one of claims 1 to 14, or, the method for neighbor cell measurement according to any one of claims 15 to 27.

FIG. 1

| |
| --- |
| receiving configuration information of a first measurement window, wherein the first measurement window is configured for a beam measurement based on a reference signal of a neighboring cell |

210

| |
| --- |
| measuring the reference signal based on the first measurement window, to obtain a beam measurement result of the neighboring cell |

220

FIG. 2

FIG. 3

D2

D1

first measurement window

D1

D1

radio frequency retuning time

non-serving cell reference signals

FIG. 4

receiving configuration information of a first measurement window, wherein the first measurement window is configured for a beam measurement based on a reference signal of a neighboring cell

210

in a case where a serving cell and the neighboring cell use a same frequency and the reference signal of the neighboring cell is included in an active bandwidth part (BWP) of the terminal, measuring the reference signal of the neighboring cell within a second measurement window, to obtain a beam measurement result of the neighboring cell; in which the second measurement window is obtained based on a difference of the first measurement window minus the radio frequency retuning time of the terminal, or, the second measurement window is determined based on the duration of the reference signal of the neighboring cell.

322

FIG. 5

receiving configuration information of a first measurement window, wherein the first measurement window is configured for a beam measurement based on a reference signal of a neighboring cell — 210

in a case where the serving cell and the neighboring cell use a same frequency and the reference signal of the neighboring cell is comprised in an active bandwidth part (BWP) of the terminal, measuring the reference signal of the neighboring cell within a first measurement window, to obtain a beam measurement result of the neighboring cell. — 324

FIG. 6

receiving configuration information of a first measurement window, wherein the first measurement window is configured for a beam measurement based on a reference signal of a neighboring cell — 210

in a case where the reference signal of the neighboring cell satisfies a first condition, measuring the reference signal of the neighboring cell within the first measurement window, to obtain a beam measurement result of the neighboring cell — 422

in a case where the reference signal does not satisfy the first condition, measuring the reference signal of the neighboring cell at a time-frequency position of the reference signal of the neighboring cell, to obtain a beam measurement result of the neighboring cell — 424

FIG. 7

receiving first update information of the first measurement window — 510

updating a configuration parameter of the first measurement window based on the first update information — 520

FIG. 8

receiving second update information of the reference signal — 610

updating a configuration parameter of the reference signal based on the second update information — 620

FIG. 9

sending configuration information of a first measurement window, wherein the first measurement window is configured for a beam measurement based on a reference signal of a neighboring cell — 710

receiving a beam measurement result of the neighboring cell obtained by a terminal through performing a measurement based on the reference signal — 720

FIG. 10

sending first update information of the first measurement window to the terminal, wherein the first update information is configured for updating a configuration parameter of the first measurement window in the terminal — 810

FIG. 11

FIG. 12

sending second update information of the reference signal of the neighboring cell to the terminal, wherein the second update information is configured for updating a configuration parameter of the reference signal of the neighboring cell — 910

FIG. 13

first receiving module — 1010

first processing module — 1020

FIG. 14

second sending module ⌐ 1110

second receiving module ⌐ 1120

second processing module ⌐ 1130

FIG. 15

processor 1201    transmitter 1203

1205

bus

1202    1204

receiver    memory

FIG. 16

1300

1301    1303    1302

processor    transmitter    receiver

bus

operating system 13041

1304

application
program module 13042

memory

FIG. 17

## INTERNATIONAL SEARCH REPORT

International application No.

**PCT/CN2022/081797**

### A. CLASSIFICATION OF SUBJECT MATTER

H04W 72/00(2009.01)i

According to International Patent Classification (IPC) or to both national classification and IPC

### B. FIELDS SEARCHED

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNTXT; ENTXT; WPABS; CNKI; 3GPP: 邻小区, 测量, 窗, 波束, 切换, 动态, 参考信号, 长度, 周期, 偏移值, 定时, 时长, 时间, 带宽, 同频, neighbor cell, measurement, window, beam, handover, dynamic, reference signal, length, periodicity, offset value, timing, duration, time, bandwidth, intra-frequency

### C. DOCUMENTS CONSIDERED TO BE RELEVANT

| Category* | Citation of document, with indication, where appropriate, of the relevant passages | Relevant to claim No. |
|---|---|---|
| X | WO 2021195012 A1 (NOKIA TECHNOLOGIES OY et al.) 30 September 2021 (2021-09-30) description paragraphs 48 to 81 | 1, 2, 15, 16, 28-33 |
| A | WO 2020029284 A1 (BEIJING XIAOMI MOBILE SOFTWARE CO., LTD.) 13 February 2020 (2020-02-13) entire document | 1-33 |
| A | WO 2022021445 A1 (GUANGDONG OPPO MOBILE TELECOMMUNICATIONS CORP., LTD.) 03 February 2022 (2022-02-03) entire document | 1-33 |
| A | WO 2021006803 A1 (TELEFONAKTIEBOLAGET LM ERICSSON (PUBL)) 14 January 2021 (2021-01-14) entire document | 1-33 |
| A | WO 2021221319 A1 (LG ELECTRONICS INC.) 04 November 2021 (2021-11-04) entire document | 1-33 |
| A | CN 109478915 A (HUAWEI TECHNOLOGIES CO., LTD.) 15 March 2019 (2019-03-15) entire document | 1-33 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 September 2022** | **10 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/081797**

| Patent document cited in search report | | | Publication date (day/month/year) | Patent family member(s) | | | Publication date (day/month/year) |
|---|---|---|---|---|---|---|---|
| WO | 2021195012 | A1 | 30 September 2021 | None | | | |
| WO | 2020029284 | A1 | 13 February 2020 | US | 2021320766 | A1 | 14 October 2021 |
| | | | | JP | 2021534636 | A | 09 December 2021 |
| | | | | RU | 2759426 | C1 | 12 November 2021 |
| | | | | KR | 20210055700 | A | 17 May 2021 |
| | | | | EP | 3836476 | A1 | 16 June 2021 |
| | | | | CN | 109076478 | A | 21 December 2018 |
| | | | | BR | 112021002484 | A2 | 27 July 2021 |
| | | | | SG | 11202101419 S | A | 30 March 2021 |
| WO | 2022021445 | A1 | 03 February 2022 | None | | | |
| WO | 2021006803 | A1 | 14 January 2021 | EP | 3994924 | A1 | 11 May 2022 |
| | | | | CN | 114041308 | A | 11 February 2022 |
| WO | 2021221319 | A1 | 04 November 2021 | None | | | |
| CN | 109478915 | A | 15 March 2019 | EP | 3509227 | A1 | 10 July 2019 |
| | | | | WO | 2018053767 | A1 | 29 March 2018 |
| | | | | AU | 2016424023 | A1 | 16 May 2019 |
| | | | | US | 2020028599 | A1 | 23 January 2020 |

Form PCT/ISA/210 (patent family annex) (January 2015)